(19) Europäisches Patentamt
European Patent Office
Office européen des brevets

(11) Veröffentlichungsnummer: **0 419 936 B1**

(12) **EUROPÄISCHE PATENTSCHRIFT**

(45) Veröffentlichungstag der Patentschrift: **01.06.94**

(51) Int. Cl.⁵: **G01J 9/00**, G03H 1/04

(21) Anmeldenummer: **90117490.4**

(22) Anmeldetag: **11.09.90**

(54) **Verfahren und Vorrichtung zur Phasenmessung von Strahlung, insbesondere Lichtstrahlung.**

(30) Priorität: **13.09.89 DE 3930632**

(43) Veröffentlichungstag der Anmeldung:
**03.04.91 Patentblatt 91/14**

(45) Bekanntmachung des Hinweises auf die
Patenterteilung:
**01.06.94 Patentblatt 94/22**

(84) Benannte Vertragsstaaten:
**AT BE CH DE DK ES FR GB GR IT LI LU NL SE**

(56) Entgegenhaltungen:
DD-A- 229 208       DE-A- 2 312 229
DE-A- 3 430 820     DE-A- 3 541 891
DE-A- 3 633 922     DE-A- 3 723 555
US-A- 4 352 965     US-A- 4 611 288

APPLIED OPTICS, vol. 18, no. 7, April 1979
Y.Y. HUNG, C.Y. LIANG "Image shearing camera for direct measurement of surface strains" Seiten 1046-1051

(73) Patentinhaber: **Steinbichler, Hans, Dr.**
**Am Bauhof 4**
**D-83115 Neubeuern(DE)**

(72) Erfinder: **Steinbichler, Hans, Dr.**
**Am Bauhof 4**
**D-8201 Neubeuern(DE)**
Erfinder: **Gutjahr, Jörg**
**Heidenweg 18**
**D-5223 Nümbrecht(DE)**

(74) Vertreter: **Zinnecker, Armin, Dipl.-Ing. et al**
**Lorenz-Seidler-Gossel,**
**Widenmayerstrasse 23**
**D-80538 München (DE)**

## Beschreibung

Die Erfindung betrifft ein Verfahren zur direkten Phasenmessung von Strahlung, insbesondere Lichtstrahlung, die von einem Körper mit diffus reflektierender Oberfläche reflektiert wird und eine Vorrichtung zur Durchführung eines derartigen Verfahrens. Die Erfindung betrifft ferner ein Verfahren zur direkten Phasenmessung von Strahlung, insbesondere Lichtstrahlung oder Infrarotstrahlung, die ein transparentes Medium durchläuft oder die von einer spiegelnden Oberfläche reflektiert wird, und eine Vorrichtung zur Durchführung eines derartigen Verfahrens.

Das Verfahren der direkten Phasenmessung kann dazu benutzt werden, um Linienbilder quantitativ auszuwerten, wie sie bei interferometrischen Methoden oder bei der Projektion von Linienmustern auf Objektive oder bei Moiré-Methoden entstehen. Die genannten Methoden dienen zur Messung des optischen Weges oder zur Messung der Änderungen des optischen Weges, hervorgerufen durch Verschiebungen oder Verformungen lichtstreuender Objekte oder Brechzahländerungen transparenter Objekte. Projektions- oder Moiré-Methoden dienen u.a. der Bestimmung von drei-dimensionalen Formen von Objekten oder deren Änderung.

Es ist bereits bekannt, Linienbilder auf der Oberfläche eines räumlichen Körpers mit der Phasenshift-Technik auszuwerten. Ein derartiges Verfahren ist in der DE-OS 37 23 555 beschrieben, das sich allerdings nur auf Projektions- und Moiré-Verfahren bezieht. Auf den Inhalt dieser Vorveröffentlichung wird Bezug genommen. Bei dem vorbekannten Verfahren werden mindestens drei phasenverschobene Bilder in einen Rechner eingelesen und ausgewertet. Zur vollständigen, automatischen Bestimmung des räumlichen Verlaufs der Oberfläche des Körpers, also zur Bestimmung aller drei Raumkoordinaten für jeden Punkt der Oberfläche des Körpers, ist es erforderlich, mindestens drei phasenverschobene Bilder in den Rechner einzulesen und auszuwerten, da in der Gleichung für die gemessene Intensität eines jeweiligen Bildpunktes drei Unbekannte vorliegen:

$$I = a(x)(1 + m(x)\cos\phi)$$

Hierin bedeuten

    $I$    = Intensität (gemessen)
    $a$    = Untergrundhelligkeit
    $m$    = Kontrast
    $\phi$    = Phasenverschiebung (gesuchte Größe)

Da lediglich die Intensität gemessen werden kann, befinden sich in der obengenannten Gleichung drei Unbekannte. Zur Ermittlung der gesuchten Phasenverschiebung ist es also erforderlich, drei Gleichungen zu erhalten, was dadurch erfolgt, daß drei phasenverschobene Bilder aufgenommen werden. Die Einzelheiten sind in der DE-A- 37 23 555 beschrieben.

Bei dem vorbekannten Verfahren kann der räumliche Verlauf der Oberfläche eines Körpers auch mit nur einer einzigen Aufnahme berechnet werden, wenn zusätzliche weitere Informationen eingegeben werden. In der Praxis ist es jedoch oft wünschenswert oder sogar erforderlich, den räumlichen Verlauf der Oberfläche eines Körpers automatisch ohne zusätzlich einzugebende Informationen zu ermitteln. In diesem Fall müssen bei dem vorbekannten Verfahren drei Aufnahmen gemacht werden. Während der Zeitspanne zwischen diesen Aufnahmen kann sich die Oberfläche des Körpers verändern. Hierdurch können dann zu ungenaue oder gar unbrauchbare Ergebnisse entstehen. Insbesondere bei der Schwingungsanalyse muß der Oberflächenverlauf durch eine einzige Aufnahme festgestellt werden können.

Aus der DE-A- 35 41 891 ist ein Verfahren nach dem Oberbegriff des Anspruchs 1 bekannt. Das dort beschriebene Verfahren dient zur Erfassung, Speicherung und Wiedergabe von geometrischen Daten von Objekten, insbesondere von Kiefermodellen. Dabei wird das Objekt, das eine diffus reflektierende Oberfläche aufweist, mit kohärenter Strahlung, nämlich Laserstrahlung, bestrahlt. Die reflektierte Strahlung bildet zusammen mit einer Referenzstrahlung ein Interferenzmuster, das von einer Abbildungsoptik auf einen Sensor, der eine CCD-Kamera sein kann, abgebildet wird. Aus den Intensitätssignalen der Sensorelemente des Sensors kann die Phase der Strahlung und damit die dreidimensionale Struktur des Objekts bestimmt werden.

Die US-A- 46 11 288 zeigt ein Verfahren zur Phasenmessung von Strahlung von einem Körper mit diffus reflektierende Oberfläche, wobei der Körper, beispielsweise eine Zahnkrone oder ein Zahn-Inlay, mit kohärenter Strahlung, nämlich Laserstrahlung, bestrahlt wird, die reflektierte Strahlung zusammen mit der Referenzstrahlung ein Interferenzmuster erzeugt, das auf einen Detektor, beispielsweise einen CCD-Sensor, abgebildet wird, und aus den Intensitätssignalen die Phase errechnet wird.

Aufgabe der Erfindung ist es, ein Verfahren der eingangs angegebenen Art zur direkten Phasenmessung von Strahlung und eine Vorrichtung zur Durchführung eines derartigen Verfahrens vorzuschlagen, mit denen mit einer einzigen Aufnahme eine vollständige Phasenmessung möglich ist.

Bei einem Verfahren der eingangs angegebenen Art wird diese Aufgabe durch die im kennzeichnenden Teil des Anspruchs 1 angegebenen Merkmale gelöst. Danach wird der Körper mit kohärenter Strahlung (z.B. Laserstrahlung) einer vorbestimmten Frequenz bestrahlt. Es wird die (diffus) reflektierte Strahlung von einer Abbildungsoptik in eine Bildebene abgebildet, in der sich ein Sensor mit einer Vielzahl von vorzugsweise regelmäßig angeordneten Sensorelementen befindet. Bei einem analogen Sensor (z.B. Röhrenkamera) entspricht das Sensorelement der Auflösung. Auf den Sensor wird eine Referenzstrahlung mit gleicher Frequenz und definierter Phasenlage überlagert, so daß ein Interferenzfeld auf dem Sensor entsteht. Der Referenzstrahl wird dabei so eingestellt, daß eine Periode des Interferenzfeldes mindestens drei Sensorelemente überdeckt. Die Abbildungsoptik wird derart ausgebildet bzw. eingestellt, daß ein Bild eines durch die Strahlung auf dem Körper erzeugten Speckles in der Bildebene ebenfalls mindestens drei Sensorelemente überdeckt. Aus den Intensitätssignalen der mindestens drei Sensorelemente wird die Phase der Strahlung von dem Körper bestimmt.

Bei der Bestrahlung eines diffus reflektierenden Körpers oder diffus streuenden Körpers (z.B. Mattscheibe) mit kohärenter Strahlung, wie beispielsweise Laserlicht, werden sogenannte speckles sichtbar. Der physikalische Mechanismus, der dieser speckle-Bildung zugrundeliegt, ist bekannt.

Der durchschnittliche Durchmesser eines speckles errechnet sich nach der Formel (Literatur: Charles Vest: Holografic Interferometry, Seite 35; Verlag: John Wiley & Sons, New York)

$$d = 1,5 \times L \times z / D$$

Hierin bedeuten:

d = durchschnittlicher speckle-Durchmesser
L = Wellenlänge der Strahlung
z = Bildweite (Abstand der Hauptebene der Abbildungsoptik von der Bildebene)
D = Durchmesser der Abbildungsoptik (bzw. des Objektivs der Abbildungsoptik)

Den Bildern der speckles in der Bildebene wird eine Referenzstrahlung mit einer vorgegebenen Trägerfrequenz überlagert. Die Referenzstrahlung besitzt eine definierte Phasenlage. Durch die Überlagerung der Referenzstrahlung mit der vom Körper reflektierten Strahlung entsteht ein Interferenzmuster. Dieses Interferenzmuster, das der Trägerfrequenz entspricht, wird so eingestellt, daß eine Periode auf mindestens drei Sensorelemente (Pixel) entfällt. Das für jedes speckle entstehende Interferenzmuster wird von mindestens drei Sensorelementen (pixel = picture element) empfangen. Man erhält also pro speckle mindestens drei Stützstellen für die Bestimmung der Phasenlage. Für eine Gruppe von drei Sensorelementen kann damit die Phasenlage eindeutig berechnet werden. Im Endergebnis wird durch diese Verfahrensweise das Auflösungsvermögen des Sensors auf ein Drittel reduziert, da für die Phasenbestimmung eines Punktes drei Sensorelemente erforderlich sind. Hierfür erhält man jedoch den großen Vorteil, daß man die Phasenlage mit einer einzigen Aufnahme eindeutig bestimmen und berechnen kann. Aus der Phasenlage kann auf die Koordinaten der Oberfläche des Körpers geschlossen werden, beispielsweise nach dem Verfahren der DE-OS 37 23 555.

Bei gerichteten Strahlen, wie sie bei spiegelnden oder transparenten Objekten auftreten, treten keine speckles auf. Das Interferenzfeld auf dem Sensor zwischen der von dem Objekt kommenden Strahlung und der Referenzstrahlung ist dann so einzustellen, daß eine Periode dieses Interferenzfeldes mindestens drei Sensorelemente überdeckt.

Das erfindungsgemäße Verfahren eignet sich besonders für die Schwingungsanalyse (Analyse von dynamischen Verformungen), für die zerstörungsfreie Werkstoffprüfung, für die Konturprüfung (beispielsweise von Zähnen), für die Verformungsmessung (Analyse statischer Verformungen), für interferometrische und projizierende Verfahren, für Moiré und auch für die Spannungsoptik.

Vorteilhafte Weiterbildungen des Verfahrens sind in den abhängigen Ansprüchen beschrieben.

Die Sensorelemente (pixel) können zeilenweise längs paralleler Linien vorzugsweise gleichbeabstandet angeordnet sein. Vorzugsweise wird die Abbildungsoptik derart ausgebildet bzw. eingestellt, daß die Bilder der durch die Strahlung auf dem Körper erzeugten speckles in der Bildebene mindestens drei nebeneinander liegende Sensorelemente einer Zeile überdecken. Es werden dann drei in einer Zeile nebeneinander liegende Stützstellen für die Bestimmung der Phasenlage verwendet.

Vorzugsweise wird die Referenzstrahlung durch einen Lichtwellenleiter in die Abbildungsoptik eingeleitet. Eine andere Möglichkeit besteht darin, die Referenzstrahlung durch eine vor oder in der Abbildungsoptik angeordnete Blende mit mehreren, vorzugsweise zwei, Aperturen zu erzeugen. Die Referenzstrahlung kann auch durch einen vor oder in der Abbildungsoptik angeordneten optischen Keil (Prisma) erzeugt werden, der einen Teil, vorzugsweise eine Hälfte, der Apertur der Abbildungsoptik überdeckt. Dieses Verfahren ist als "Shearing-Verfahren" bereits bekannt, das zur Verformungsmessung verwendet wird. Es wurde in der Literaturstelle Applied Optics, Vol. 18, No. 7, April 1, 1979, S. 1046-1051, beschrieben (Y.Y. Hung and C.Y. Liang, Image-Shearing camera for direct measurement of surface strains). Die Abbildung erfolgte hier nicht auf einen optoelektronischen Sensor mit der Besonderheit, daß die Periode der Trägerfrequenz auf mindestens drei pixel abgestimmt ist, sondern auf normales Silberschichtfotomaterial.

Die Referenzstrahlung kann auch durch ein vor oder in der Abbildungsoptik angeordnetes optisches Gitter erzeugt werden.

Eine weitere vorteilhafte Weiterbildung ist dadurch gekennzeichnet, daß die Referenzstrahlung über einen Strahlteiler in den abbildenden Strahlengang eingeleitet wird.

Vorzugsweise werden auf den Sensor mehrere Referenzstrahlungen mit jeweils einer vorbestimmten, vorzugsweise konstanten Trägerfrequenz mit definierter Phasenlage überlagert. Es können zwei Referenzstrahlungen überlagert werden. Die Referenzstrahlungen können jeweils verschiedene Frequenzen aufweisen.

Vorteilhaft ist es, wenn in dem abbildenden Strahlengang eine Zwischenabbildung erzeugt wird. Der abbildende Strahlengang enthält also eine Zwischenabbildung. Dies wird dadurch erreicht, daß ein erstes Objektiv und ein zweites Objektiv vorgesehen sind, wobei sich das erste Objektiv näher am Objekt und das zweite Objektiv näher an der Bildebene befindet. Zwischen beiden Objektiven befindet sich die Zwischenabbildung. Diese Anordnung bringt den Vorteil mit sich, daß das erste Objektiv ohne Schwierigkeiten gewechselt werden kann. Es ist auch möglich, für das erste Objektiv ein Zoom-Objektiv zu verwenden. Durch beide Maßnahmen kann der Bildausschnitt beliebig gewählt werden, ohne daß eine Neujustierung der gesamten Anordnung erfolgen muß. Die Referenzstrahlung wird in der Hauptebene des zweiten Objektivs eingeleitet.

Die oben angegebene Aufgabe wird auch durch eine Vorrichtung nach dem Anspruch 14 gelöst. Vorteilhafte Weiterbildungen dieser Vorrichtung sind in den weiteren Unteransprüchen beschrieben.

Die Erfindung betrifft weiterhin ein Verfahren zur direkten Phasenmessung von Strahlung, insbesondere Lichtstrahlung oder Infrarotstrahlung, die ein transparentes Medium durchläuft oder die von einer spiegelnden Oberfläche reflektiert wird. Die oben angegebene Aufgabe wird bei einem derartigen Verfahren durch die kennzeichnenden Merkmale des Anspruchs 13 gelöst. Weiterhin betrifft die Erfindung eine Vorrichtung zur Durchführung des Verfahrens nach Anspruch 13, die aus den Merkmalen des Anspruchs 29 besteht.

Ausführungsbeispiele der Erfindung werden nachstehend anhand der beigefügten Zeichnungen im einzelnen beschrieben. In den Zeichnungen zeigt

| | |
|---|---|
| Fig. 1 | eine Darstellung des Verfahrens in einer schematischen Ansicht, |
| Fig. 2 | einen Sensor mit Sensorelementen (pixel) in einer schematischen Darstellung, |
| Fig. 3 | eine Abbildungsoptik in einer schematischen Darstellung, |
| Fig. 4 | den Verlauf der Intensität der Strahlung im Verhältnis zu einer Zeile des Sensors in einer schematischen Darstellung, |
| Fig. 5 | eine Abbildungsoptik mit einem Lichtwellenleiter, |
| Fig. 6 | eine Abbildungsoptik mit einer Blende mit mehreren Aperturen, |
| Fig. 7 | eine Abbildungsoptik mit einem Gitter, |
| Fig. 8 | eine Abbildungsoptik mit einem Keil (Prisma), |
| Fig. 9 | eine Darstellung des Verfahrens für Phasenobjekte, |
| Fig. 10 | eine Abbildungsoptik mit einer Zwischenabbildung und |
| Fig. 11 | eine Abbildungsoptik mit einem Strahlteiler. |

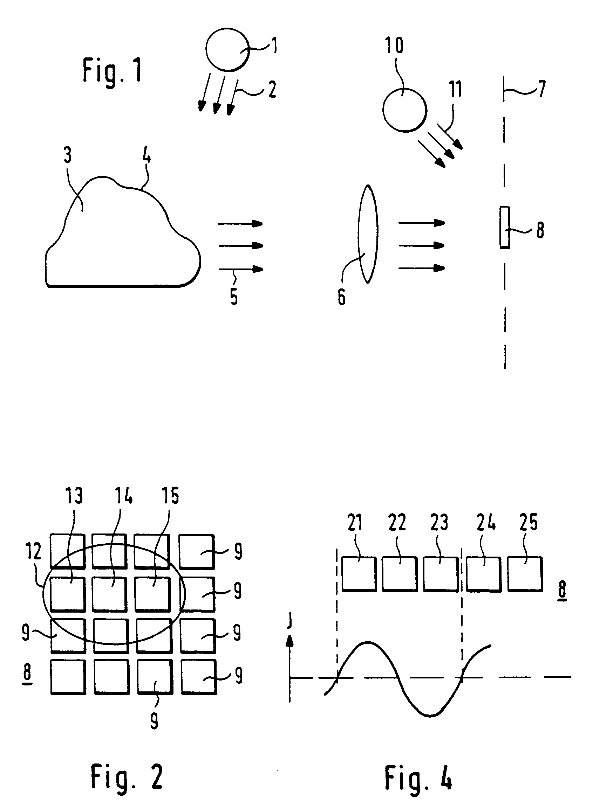

Die Fig. 1 zeigt eine Schemadarstellung des erfindungsgemäßen Verfahrens sowie einer Vorrichtung zur Durchführung dieses Verfahrens. Von der Strahlungsquelle 1 wird kohärente Strahlung (Laserstrahlung) 2 einer vorbestimmten Frequenz auf den Körper 3 mit diffus reflektierender Oberfläche 4 gestrahlt.

Die von der Oberfläche 4 des Körpers 3 reflektierte Strahlung 5 wird von einer Abbildungsoptik 6 in eine Bildebene 7 abgebildet. In der Bildebene 7 ist ein Sensor 8 mit einer Vielzahl von regelmäßig angeordneten Sensorelementen 9 (Fig. 2) angeordnet. Der Sensor kann ein CCD-Sensor bzw. eine CCD-Matrix sein. Bei den zur Zeit erreichbaren Sensorelement-Dichten befinden sich etwa 100 Sensorelemente (pixel) pro mm auf dem Sensor.

Der Sensor 8 wird weiterhin von einer Referenzstrahlungquelle 10 mit einer Referenzstrahlung 11 mit einer vorbestimmten, vorzugsweise konstanten Trägerfrequenz mit definierter Phasenlage bestrahlt. Die Frequenz der Referenzstrahlung ist vorzugsweise genauso groß wie die Frequenz der Strahlung 2.

Die Abbildungsoptik 6 ist derart ausgebildet bzw. eingestellt, daß die Bilder der durch die Strahlung 2 auf der Oberfläche 4 des Körpers 3 erzeugten speckles in der Bildebene 8 mindestens drei Sensorelemente 9 überdecken. Dies wird anhand der Fig. 2 deutlich: Das dort angedeutete speckle 12 überdeckt mindestens drei Sensorelemente 13, 14, 15. Aus den Intensitätssignalen der mindestens drei Sensorelemente wird die Phase der Strahlung 5 von der Oberfläche 4 des Körpers 3 durch eine in der Zeichnung nicht dargestellte Recheneinheit bestimmt.

Wie aus Fig. 2 ersichtlich, sind die Sensorelemente zeilenweise längs paralleler Linien gleichbeabstandet angeordnet. Die Abbildungsoptik 6 ist derart ausgebildet bzw. eingestellt, daß die Bilder der durch die Strahlung 2 auf der Oberfläche 4 des Körpers 3 erzeugten speckles 12 in der Bildebene mindestens drei nebeneinanderliegende Sensorelemente 13, 14, 15 einer Zeile überdecken.

In der Fig. 4 ist schematisch die Intensität I dargestellt.

Durch die Interferenz der Strahlung 5 von der Oberfläche 4 des Körpers 3 mit der Referenzstrahlung 11 wird der in der Fig. 4 gezeigte Intensitätsverlauf I erzeugt. Über drei Sensorelemente 21, 22, 23 verläuft mindestens eine volle Schwingung der Intensität I, wie aus Fig. 4 ersichtlich. Die drei Sensorelemente 21, 22, 23 können also als Stützstellen für die Bestimmung der Phasenlage herangezogen werden. Aus den Intensitäten der drei Sensorelemente 21, 22, 23 wird die Phasenlage bestimmt bzw. errechnet. Drei nebeneinander liegende Sensorelemente ergeben also einen Wert für die Phasenlage. Anschließend wird das Verfahren mit den Sensorelementen 22, 23, 24 als Stützstellen für die Bestimmung der nächsten Phasenlage wiederholt. Auf diese Weise wird innerhalb einer Zeile fortgeschritten und anschliessend auch zeilenweise fortgeschritten.

Die Fig. 3 zeigt die Abbildungsoptik 6 in einer ausführlicheren Darstellung. Die von der Oberfläche 4 des Körpers kommende Strahlung wird von der Abbildungsoptik 6 in die Bildebene 7 abgebildet. Der Durchmesser D des Objektivs 6 und die Bildweite z sind derart gewählt, daß zusammen mit der Wellenlänge L der Strahlung der entstehende speckle-Durchmesser d so groß wird, daß er mindestens drei Sensorelemente überdeckt.

In der Fig. 5 ist eine Abbildungsoptik gezeigt, in die ein Lichtwellenleiter 31 eingeleitet wird. Durch diesen Lichtwellenleiter wird die Referenzstrahlung erzeugt.

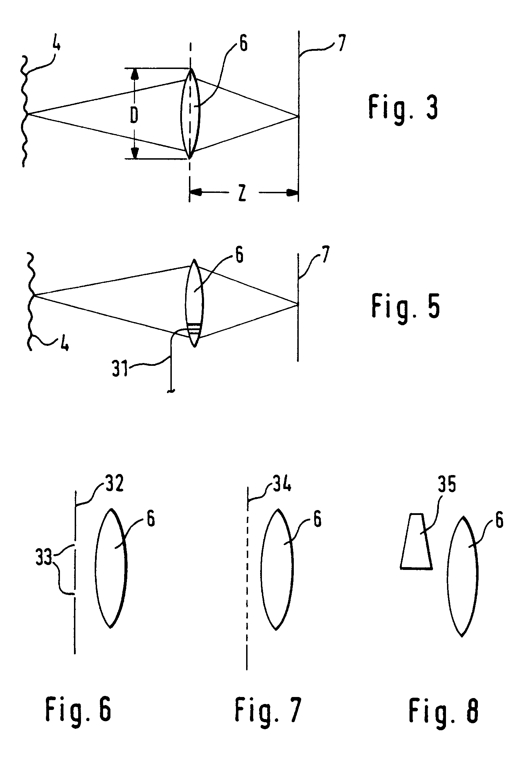

In der in Fig. 6 dargestellten Abbildungsoptik befindet sich eine Blende 32 mit mehreren Aperturen 33 vor dem Objektiv 6. Durch diese Blende mit den beiden Aperturen wird die Referenzstrahlung erzeugt.

In der Fig. 7 ist ein anderes Ausführungsbeispiel für die Erzeugung der Referenzstrahlung gezeigt. Vor dem Objektiv 6 befindet sich eine optisches Gitter 34 zur Erzeugung der Referenzstrahlung.

In der Ausführungsform der Fig. 8 ist vor dem Objektiv 6 ein optischer Keil 35 bzw. ein Prisma angeordnet, welches die obere Hälfte der Abbildungsoptik 6 überdeckt. Es wird also das sogenannte Shearing-Verfahren durchgeführt.

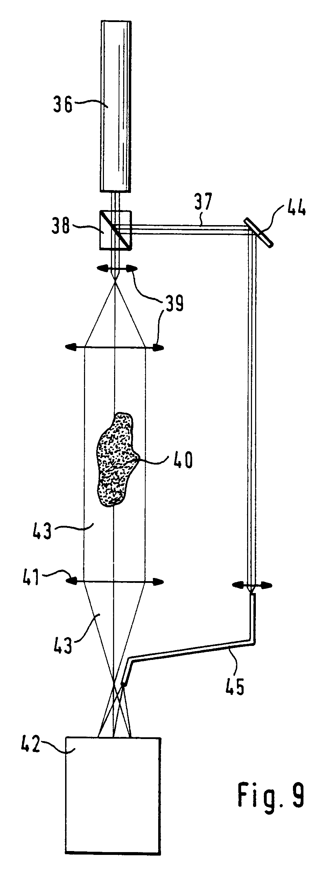

In der Fig. 9 ist ein Aufbau zur Phasenmessung mit transparenten Objekten dargestellt. Dieser Aufbau eignet sich grundsätzlich auch für die Phasenmessung bei Objekten mit spiegelnder Oberfläche. Eine kohärente Strahlung, ausgehend von einer Laserdiode 36, wird nach der Strahlteilung für den Referenzstrahl 37 im Strahlteiler 38 aufgeweitet mit einer teleskopischen Linsenanordnung 39. Der aufgeweitete Strahl durchläuft die Probe 40, wo er in Abhängigkeit einer Brechzahländerung, hervorgerufen durch Temperatur-, Druck- oder Konzentrationsänderung, eine Phasenverschiebung erfährt. Die Probe 40 wird dann mit einem Objektiv 41 auf den Sensor 42 abgebildet. Auf den Sensor 42 wird das Objektlicht 43 mit dem Referenzstrahl 37 überlagert, der z.B. über einen Spiegel 44 in einen Lichtwellenleiter 45 eingekoppelt wird.

Falls wahlweise im Objektstrahl eine Mattscheibe angeordnet wird, entsteht diffuse Strahlung, die dann wieder so abgebildet wird, daß die speckles mindestens drei Sensorelemente überdecken.

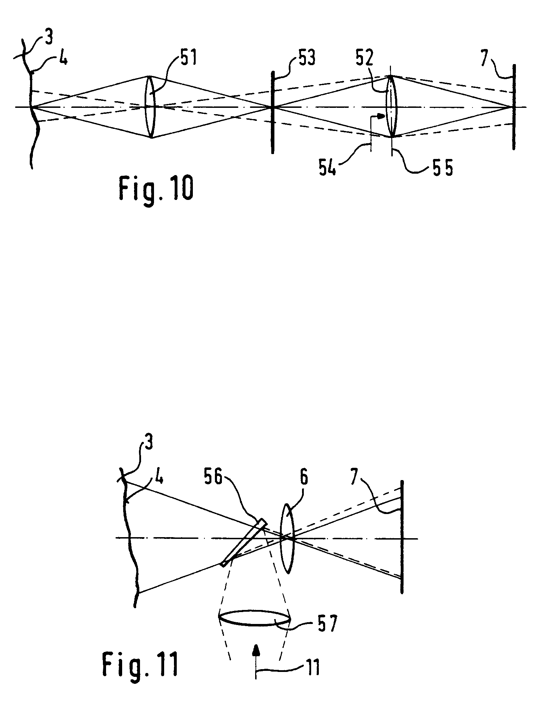

Die Fig. 10 zeigt eine Abbildungsoptik mit einer Zwischenabbildung. Die von der Oberfläche 4 des Objekts 3 kommende Strahlung durchtritt zunächst ein erstes, näher am Objekt liegendes Objektiv 51 und anschließend ein zweites, näher an der Bildebene 7 liegendes, zweites Objektiv 52. Zwischen den Objektiven 51, 52 befindet sich die Zwischenabbildung 53. Die Referenzstrahlung 54 wird in der Hauptebene 55 des zweiten, näher an der Bildebene 7 liegenden Objektivs 52 eingeleitet. Das erste Objektiv 51 ist ein auswechselbares Objektiv oder ein Zoom-Objektiv. Dadurch kann der Bildausschnitt beliebig gewählt werden, ohne daß eine Neujustierung erfolgen muß.

Die Fig. 11 zeigt eine Vorrichtung mit einem Strahlteiler. Die Referenzstrahlung 11 wird über einen Strahlteiler 56 in den Strahlengang zwischen der Oberfläche 4 des Objekts 3 und der Bildebene 7 eingeleitet. Der Strahlteiler 56 befindet sich im Strahlengang vor der Abbildungsoptik 6. Im Strahlengang des Referenzstrahls 11 befindet sich vor dem Strahlteiler 56 eine weitere Optik 57, die aus einer Sammellinse bestehen kann.

**Patentansprüche**

1. Verfahren zur direkten Phasenmessung von Strahlung, insbesondere Lichtstrahlung, die von einem Körper (3) mit diffus reflektierender Oberfläche (4) reflektiert wird, bei dem der Körper (3) mit kohärenter Strahlung (2) einer vorbestimmten Frequenz bestrahlt wird oder der Körper (3) mit einem Lack überzogen wird, in dem die Strahlung diffus reflektierende Teilchen eingelagert sind, und mit nicht kohärenter Strahlung (2) einer vorbestimmten Frequenz bestrahlt wird, die reflektierte Strahlung (5) von einer Abbildungsoptik (6) in eine Bildebene (7) abgebildet wird, in der sich ein Sensor (8) mit einer Vielzahl von vorzugsweise regelmäßig angeordneten Sensorelementen (9) befindet, auf den Sensor (8) eine Referenzstrahlung (11) mit einer vorbestimmten, vorzugsweise konstanten Trägerfrequenz mit definierter Phasenlage überlagert wird, wobei die Trägerfrequenz vorzugsweise genauso groß ist wie die Strahlungsfrequenz und

aus den Intensitätssignalen der Sensorelemente die Phase der Strahlung (5) von dem Körper (3) bestimmt wird,

dadurch gekennzeichnet,

daß die Abbildungsoptik (6) derart ausgebildet bzw. eingestellt wird, daß das Bild eines durch die Strahlung (5) auf dem Körper (3) erzeugten Speckles (12) in der Bildebene (7) mindestens drei Sensorelemente (13, 14, 15) überdeckt.

2. Verfahren nach Anspruch 1, dadurch gekennzeichnet, daß die Sensorelemente (9) zeilenweise längs paralleler Linien vorzugsweise gleichbeabstandet angeordnet sind.

3. Verfahren nach Anspruch 2, dadurch gekennzeichnet, daß die Abbildungsoptik (6) derart ausgebildet bzw. eingestellt wird, daß die Bilder der durch die Strahlung (2) auf dem Körper (3) erzeugten Speckles in der Bildebene (7) mindestens drei nebeneinander liegende Sensorelemente (13, 14, 15) einer Zeile überdecken.

4. Verfahren nach einem der vorhergehenden Ansprüche, dadurch gekennzeichnet, daß die Referenzstrahlung (11) durch einen Lichtwellenleiter (31) in die Abbildungsoptik (6) eingeleitet wird (31, Fig. 5).

5. Verfahren nach einem der Ansprüche 1 bis 3, dadurch gekennzeichnet, daß die Referenzstrahlung (11) durch eine vor oder in der Abbildungsoptik (6) angeordnete Blende (32) mit mehreren, vorzugsweise zwei, Aperturen (33) erzeugt wird (32, 33, Fig. 6).

6. Verfahren nach einem der Ansprüche 1 bis 3, dadurch gekennzeichnet, daß die Referenzstrahlung (11) durch einen vor oder in der Abbildungsoptik (6) angeordneten optischen Keil (35), vorzugsweise ein Prisma erzeugt wird, der einen Teil, vorzugsweise eine Hälfte, der Apertur der Abbildungsoptik (6) überdeckt (35, Fig. 8).

7. Verfahren nach einem der Ansprüche 1 bis 3, dadurch gekennzeichnet, daß die Referenzstrahlung (11) durch ein vor oder in der Abbildungsoptik (6) angeordnetes optisches Gitter (34) erzeugt wird (34, Fig. 7).

8. Verfahren nach einem der Ansprüche 1 bis 3, dadurch gekennzeichnet, daß die Referenzstrahlung (11) über einen Strahlteiler (56) in den abbildenden Strahlengang eingeleitet wird.

9. Verfahren nach einem der vorhergehenden Ansprüche, dadurch gekennzeichnet, daß auf den Sensor (8) mehrere Referenzstrahlungen mit jeweils einer vorbestimmten, vorzugsweise konstanten Trägerfrequenz mit definierter Phasenlage überlagert werden.

10. Verfahren nach Anspruch 9, dadurch gekennzeichnet, daß zwei Referenzstrahlungen überlagert werden.

11. Verfahren nach Anspruch 9 oder 10, dadurch gekennzeichnet, daß die Referenzstrahlungen jeweils verschiedene Frequenz aufweisen.

12. Verfahren nach einem der vorhergehenden Ansprüche, dadurch gekennzeichnet, daß in dem abbildenden Strahlengang eine Zwischenabbildung (53) erzeugt wird.

13. Verfahren zur direkten Phasenmessung von Strahlung, insbesondere Lichtstrahlung oder Infrarotstrahlung, die ein transparentes Medium durchläuft oder die von einer spiegelnden Oberfläche reflektiert wird,

bei dem

die durch das transparente Medium (40) getretene oder von der spiegelnden Oberfläche reflektierte, kohärente Strahlung (43) auf einen Sensor (42) mit einer Vielzahl von vorzugsweise regelmäßig angeordneten Sensorelementen mit einer Referenzstrahlung (37) mit gleicher Frequenz und definierter Phasenlage so überlagert wird, daß eine Periode des durch die Überlagerung entstehenden Interferenzfeldes mindestens drei Sensorelemente überdeckt

und aus den Intensitätssignalen der mindestens drei Sensorelemente die Phase der durch das transparente Medium getretenen oder von der spiegelnden Oberfläche reflektierten Strahlung (43) bestimmt wird.

14. Vorrichtung zur Durchführung des Verfahrens nach einem der Ansprüche 1 bis 12, bestehend aus

einer Strahlungsquelle (1), insbesondere einer Lichtquelle, zur Abgabe von kohärenter Strahlung (2) einer vorbestimmten Frequenz auf einen Körper (3) mit diffus reflektierender Oberfläche (4),

einer Abbildungsoptik (6) zum Abbilden der von dem Körper (3) reflektierten Strahlung (5) in eine Bildebene (7),

einem in der Bildebene (7) angeordneten Sensor (8) mit einer Vielzahl von vorzugsweise regelmäßig angeordneten Sensorelementen (9) und

einer Referenzstrahlungsquelle (10) zur Überlagerung des Sensors (8) mit einer Referenzstrahlung (11) mit gleicher Frequenz und definierter Phasenlage, sodaß durch die Überlagerung eine vorzugsweise konstante Trägerfrequenz entsteht,

dadurch gekennzeichnet,

daß die Abbildungsoptik (6) derart ausgebildet bzw. eingestellt ist, daß das Bild eines durch die Strahlung (2) auf dem Körper (3) erzeugten Speckles in der Bildebene (7) mindestens drei Sensorelemente (13, 14, 15) überdeckt,

daß der Referenzstrahl so eingekoppelt wird, daß die Periode der Trägerfrequenz mindstens drei Sensorelemente (13, 14, 15) überdeckt

und daß ein Rechner vorhanden ist, der aus den Intensitätssignalen der mindestens drei Sensorelemente (13, 14, 15) die Phase der Strahlung (5) von dem Körper (3) bestimmt.

15. Vorrichtung nach Anspruch 14, dadurch gekennzeichnet, daß die Sensorelemente (9) zeilenweise längs paralleler Linien vorzugsweise gleichbeabstandet angeordnet sind (9, Fig. 2).

16. Vorrichtung nach Anspruch 15, dadurch gekennzeichnet, daß die Abbildungsoptik (6) derart ausgebildet bzw. eingestellt ist, daß die Bilder der durch die Strahlung (2) auf dem Körper (3) erzeugten Speckles in der Bildebene (7) mindestens drei nebeneinander liegende Sensorelemente (13, 14, 15) in einer Zeile überdecken.

17. Vorrichtung nach einem der Ansprüche 14 bis 16, dadurch gekennzeichnet, daß die Referenzstrahlungsquelle aus einem in die Abbildungsoptik (6) führenden Lichtwellenleiter (31) besteht (31, Fig. 5).

18. Vorrichtung nach einem der Ansprüche 14 bis 16, dadurch gekennzeichnet, daß die Referenzstrahlungsquelle aus einer vor oder in der Abbildungsoptik (6) angeordneten Blende (32) mit mehreren, vorzugsweise zwei, Aperturen (33) besteht (32, 33, Fig. 6).

19. Vorrichtung nach einem der Ansprüche 14 bis 16, dadurch gekennzeichnet, daß die Referenzstrahlungsquelle aus einem vor oder in der Abbildungsoptik (6) angeordneten optischen Keil (35), vorzugsweise einem Prisma besteht, der einen Teil, vorzugsweise eine Hälfte, der Apertur der Abbildungsoptik (6) überdeckt (35, Fig. 8).

20. Vorrichtung nach einem der Ansprüche 14 bis 16, dadurch gekennzeichnet, daß die Referenzstrahlungquelle aus einem vor oder in der Abbildungsoptik (6) angeordneten optischen Gitter (34) besteht (34, Fig. 7).

21. Vorrichtung nach einem der Ansprüche 14 bis 16, dadurch gekennzeichnet, daß die Referenzstrahlungsquelle aus einem im abbildenden Strahlengang angeordneten Strahlteiler (56) besteht.

22. Vorrichtung nach einem der Ansprüche 14 bis 21, gekennzeichnet durch mehrere Referenzstrahlungsquellen zur Bestrahlung des Sensors (8) mit jeweils einer Referenzstrahlung mit einer vorbestimmten, vorzugsweise konstanten Trägerfrequenz mit definierter Phasenlage.

23. Vorrichtung nach Anspruch 22, gekennzeichnet durch zwei Referenzstrahlungquellen.

24. Vorrichtung nach Anspruch 22 oder 23, dadurch gekennzeichnet, daß die Referenzstrahlungen jeweils verschiedene Frequenz aufweisen.

25. Vorrichtung nach einem der Ansprüche 14 bis 24, gekennzeichnet durch eine in dem abbildenden Strahlengang angeordnete Zwischenabbildung (53).

26. Vorrichtung nach Anspruch 25, dadurch gekennzeichnet, daß in dem abbildenden Strahlengang ein erstes Objektiv (51) und ein zweites Objektiv (52) angeordnet sind, zwischen denen die Zwischenabbildung (53) erzeugt wird.

27. Vorrichtung nach Anspruch 26, dadurch gekennzeichnet, daß das erste, näher am Objekt (3) liegende Objektiv (51) ein auswechselbares Objektiv oder ein Zoom-Objektiv ist.

28. Vorrichtung nach Anspruch 26 oder 27, dadurch gekennzeichnet, daß die Referenzstrahlung (54) in das zweite, näher an der Bildebene (7) liegende Objektiv (52) eingeleitet wird.

29. Vorrichtung zur Durchführung des Verfahrens nach Anspruch 13, bestehend aus

einer Strahlungsquelle (36), insbesondere einer Lichtquelle, zur Abgabe von kohärenter Strahlung einer vorbestimmten Frequenz auf ein transparentes Medium (40) oder einen Körper mit einer spiegelnden Oberfläche,

einem Sensor (42) mit einer Vielzahl von vorzugsweise regelmäßig angeordneten Sensorelementen,

einer Referenzstrahlungsquelle zur Bestrahlung des Sensors (42) mit gleicher Frequenz wie die durch das transparente Medium getretene oder von dem Körper mit spiegelnder Oberfläche reflektierte Strahlung,

wobei eine Periode des durch die Überlagerung entstehenden Interferenzfeldes mindestens drei Sensorelemente überdeckt,

und einem Rechner, der aus den Intensitätssignalen der mindestens drei Sensorelemente die Phase der durch das transparente Medium (40) getretenen oder von der spiegelnden Oberfläche reflektierten Strahlung bestimmt.

**Claims**

1. A method for the direct phase indication of radiation, in particular light radiation, which is reflected by a body (3) with a diffusely reflecting surface (4), wherein

the body (3) is irradiated with a coherent radiation (2) with a predetermined frequency, or the body (3) is coated with a lacquer wherein there are embedded particles diffusely reflecting the radiation and is irradiated with a noncoherent radiation (2) of a predetermined frequency,

the reflected radiation (5) is imaged by an image-forming optical means (6) in an image plane (7), wherein there is disposed a sensor (8) with a plurality of preferably regularly arranged sensor elements (9),

a reference radiation (11) with a predetermined, preferably constant carrier frequency with a defined phase position is superimposed onto the sensor (8), in which arrangement, the carrier frequency preferably has the same value as the radiation frequency,

and the phase of the radiation (5) from the body (3) is determined from the intensity signals of the sensor elements,

characterized in that

the image-forming optical means (6) is designed or adjusted in such a way that the image of a speckle (12) produced by the radiation (5) on the body (3) covers in the image plane (7) at least three sensor elements (13, 14, 15).

2. A method according to claim 1, characterized in that the sensor elements (9) are arranged in rows along parallel lines that are preferably equidistant.

3. A method according to claim 2, characterized in that the image-forming optical means (6) is designed or adjusted in such a way that the images of the speckles produced by the radiation (2) on the body (3) covers in the image plane (7) at least three sensor elements (13, 14, 15) of one row, which lie next to one another.

4. A method according to one of the preceding claims, characterized in that the reference radiation (11) is introduced through a light wave guide (31) into the image-forming optical means (6) (31, Fig. 5).

5. A method according to one of claims 1 to 3, characterized in that the reference radiation (11) is produced by a diaphragm (32) with several, preferably two, apertures (33), which is arranged ahead of, or in, the image-forming optical means (6) (32, 33, Fig.6).

6. A method according to one of claims 1 to 3, characterized in that the reference radiation (11) is produced by an optical wedge (35), preferably a prism, which is arranged ahead of, or in, the image-forming optical means (6) which covers a part, preferably half, of the aperture of the image-forming optical means (6). (35, Fig.8).

7. A method according to one of claims 1 to 3, characterized in that the reference radiation (11) is produced by an optical grating (34) arranged ahead of, or in, the image-forming optical means (6) (34, Fig. 7).

8. A method according to one of claims 1 to 3, characterized in that the reference radiation (11) is introduced into the imaging beam path via a beam splitter (56).

9. A method according to one of the preceding claims, characterized in that several reference radiations with respectively one predetermined, preferably constant, carrier frequency with a defined phase position are superimposed onto the sensor (8).

10. A method according to claim 9, characterized in that two reference radiations are superimposed.

11. A method according to claim 9 or 10, characterized in that the reference radiations have respectively a different frequency.

**12.** A method according to one of the preceding claims, characterized in that an intermediate image (53) is produced in the imaging beam path.

**13.** A method for the direct phase indication of radiation, in particular light radiation or infrared radiation which passes through a transparent medium or which is reflected by a specular surface,
wherein
the coherent radiation (43) which has passed through the transparent medium (40) or has been reflected by the specular surface is covered on a sensor (42) comprising a plurality of sensor elements which preferably are regularly arranged, by a reference radiation (37) with the same frequency and a defined phase position, in such a way that a period of the interference field produced by the superimposition covers at least three sensor elements,
and the phase of the radiation (43) which has passed through the transparent medium or has been reflected by the specular surface is determined from the intensity signals of said at least three sensor elements.

**14.** An apparatus for operating the method according to one of claims 1 to 12, consisting of
a radiation source (1), in particular a light source, for the emission of coherent radiation (2) of a predetermined frequency onto a body (3) with a diffusely reflecting surface (4),
an image-forming optical means (6) for imaging the radiation (5) reflected by the body (3) in an image plane (7),
a sensor (8) arranged in the image plane (7) with a plurality of preferably regularly arranged sensor elements (9) and
a reference radiation source (10) for superimposing on the sensor (8) a reference radiation (11) with the same frequency and a defined phase position, so that a preferably constant carrier frequency is produced by the superimposition,
characterized in that
the image-forming optical means (6) is designed or adjusted in such a way that the image of a speckle (12) produced by the radiation (2) on the body (3) covers in the image plane (7) at least three sensor elements (13, 14, 15),
that the reference beam is fed in, in such a way that the period of the carrier frequency covers at least three sensor elements (13, 14, 15),
and that a computer is available which determines the phase of the radiation (5) from the body (3) from the intensity signals of said at least three sensor elements (13, 14, 15).

**15.** An apparatus according to claim 14, characterized in that the sensor elements (9) are arranged in rows along parallel lines that are preferably equidistant (9, Figure 2).

**16.** An apparatus according to claim 15, characterized in that the image-forming optical means (6) is designed or adjusted in such a way that the images of the speckles produced by the radiation (2) on the body (3) cover in the image plane (7) at least three sensor elements (13, 14, 15) that lie next to one another in one row.

**17.** An apparatus according to one of claims 14 to 16, characterized in that the reference radiation source consists of a light wave guide (31) leading into the image-forming optical means (6) (31, Figure 5).

**18.** An apparatus according to one of claims 14 to 16, characterized in that the reference radiation source consists of a diaphragm (32) with several, preferably two, apertures (33), which is arranged ahead of, or in, the image-forming optical means (6) (32, 33, Fig. 6).

**19.** An apparatus according to one of claims 14 to 16 characterized in that the reference radiation source consists of an optical wedge (35), preferably a prism, which is arranged ahead of, or in, the image-forming optical means (6) and covers a part, preferably half, of the aperture of the image-forming optical means (6) (35, Fig. 8).

**20.** An apparatus according to one of claims 14 to 16, characterized in that the reference radiation source consists of an optical grating (34) arranged ahead of, or in, the image-forming optical means (6) (34, Fig. 7).

**21.** An apparatus according to one of claims 14 to 16, characterized in that the reference radiation source consists of a beam splitter (56) arranged in the imaging beam path.

**22.** An apparatus according to one of claims 14 to 21 , characterized by several reference radiation sources for irradiating the sensor (8) with respectively one reference radiation with a predetermined, preferably constant, carrier frequency with a defined phase position.

**23.** An apparatus according to claim 22, characterized by two reference radiation sources.

24. An apparatus according to claim 22 or 23, characterized in that the reference radiations respectively have a different frequency.

25. An apparatus according to one of claims 14 to 24, characterized by an intermediate image (53) arranged in the imaging beam path.

26. An apparatus according to claim 25, characterized in that a first lens (51) and a second lens (52) are arranged in the imaging beam path, between which the intermediate image (53) is produced.

27. An apparatus according to claim 26, characterized in that the first lens (51) disposed nearer the object (3) is an interchangeable lens or a zoom lens.

28. An apparatus according to claim 26 or 27, characterized in that the reference radiation (54) is introduced into the second lens (52) disposed nearer the image plane (7).

29. An apparatus for operating the method according to Claim 13, consisting of
a radiation source (36), in particular a light source, for the emission of coherent radiation of a predetermined frequency onto a transparent medium (40) or a body with a specular surface,
a sensor (42) with a plurality of preferably regularly arranged sensor elements,
a reference radiation source for irradiating the sensor (42) with the same frequency as the radiation passed through the transparent medium or reflected by the body with the specular surface,
in which arrangement, one period of the interference field produced by the superimposition covers at least three sensor elements,
and a computer which determines the phase of the radiation that has passed through the transparent medium (40), or has been reflected by the specular surface, from the intensity signals of said at least three sensor elements.

**Revendications**

1. Procédé pour la mesure directe de phase de rayonnement, notamment de rayonnement lumineux qui est réfléchi par un corps (3) avec une surface (4) réfléchissant de manière diffuse, dans lequel :
le corps (3) est irradié par un rayonnement cohérent (2) d'une fréquence prédéterminée ou bien le corps (3) est recouvert d'un vernis dans lequel sont noyées des particules réfléchissant de manière diffuse le rayonnement, et est irradié par un rayonnement non cohérent (2) d'une fréquence prédéterminée,
le rayonnement réfléchi (5) est représenté par une optique de reproduction (6) dans un plan d'image (7) dans lequel se trouve un capteur (8) avec un grand nombre d'éléments de capteurs (9) disposés de préférence régulièrement,
on superpose au capteur (8) un rayonnement de référence (11) d'une fréquence porteuse prédéterminée, de préférence constante, avec une relation des phases définie, la fréquence porteuse étant de préférence aussi grande que la fréquence de rayonnement, et
on détermine à partir des signaux d'intensité des éléments capteurs, la phase du rayonnement (5) du corps (3),
caractérisé
en ce que l'optique de reproduction (6) est réalisée et réglée de façon que l'image d'une tache (12) produite par le rayonnement (5) sur le corps (3) recouvre dans le plan d'image (7) au moins trois éléments capteurs (13, 14, 15).

2. Procédé selon la revendication 1, caractérisé en ce que les éléments capteurs (9) sont disposés par lignes le long de lignes parallèles de préférence à des distances égales.

3. Procédé selon la revendication 2, caractérisé en ce que l'optique de reproduction (6) est réalisée et réglée de façon que les images des taches produites par le rayonnement (2) sur le corps (3) recouvrent dans le plan d'image (7) au moins trois éléments capteurs (13, 14, 15) situés les uns à côté des autres d'une ligne.

4. Procédé selon l'une des revendications précédentes, caractérisé en ce que le rayonnement de référence (11) est introduit par un guide d'ondes lumineuses (31) dans l'optique de reproduction (6) (31, figure 5).

5. Procédé selon l'une des revendications 1 à 3, caractérisé en ce que le rayonnement de référence (11) est produit par un diaphragme (32) disposé devant ou dans l'optique de reproduction (6) avec plusieurs, de préférence deux ouvertures (33) (32, 33, figure 6).

6. Procédé selon l'une des revendications 1 à 3, caractérisé en ce que le rayonnement de référence (11) est produit par un coin optique (35) de préférence un prisme disposé devant ou dans l'optique de reproduction (6), qui recouvre une partie, de préférence une moitié de l'ouverture de l'optique de reproduction (6) (35, figure 8).

**7.** Procédé selon l'une des revendications 1 à 3, caractérisé en ce que le rayonnement de référence (11) est produit par une grille optique (34) disposée devant ou dans l'optique de reproduction (6) (34, figure 7).

**8.** Procédé selon l'une des revendications 1 à 3, caractérisé en ce que le rayonnement de référence (11) est introduit par un diviseur de rayons (56) dans le trajet des rayons de reproduction.

**9.** Procédé selon l'une des revendications précédentes, caractérisé en ce qu'on superpose au capteur (8) plusieurs rayonnements de référence avec, respectivement, une fréquence porteuse prédéterminée, de préférence constante, avec une relation des phases définie.

**10.** Procédé selon la revendication 9, caractérisé en ce que deux rayonnements de référence sont superposés.

**11.** Procédé selon la revendication 9 ou 10, caractérisé en ce que les rayonnements de référence ont des fréquences respectivement différentes.

**12.** Procédé selon l'une des revendications précédentes, caractérisé en ce qu'on produit dans le trajet des rayons de reproduction une reproduction intermédiaire (53).

**13.** Procédé pour la mesure directe de phase de rayonnement, notamment de rayonnement lumineux ou de rayonnement infrarouge qui passe à travers un milieu transparent ou qui est réfléchi par une surface spéculaire, dans lequel on superpose au rayonnement cohérent (43), ayant traversé le milieu transparent (40) ou réfléchi par la surface spéculaire, sur un capteur (42) comprenant un grand nombre d'éléments capteurs disposés de préférence régulièrement, un rayonnement de référence (37) de la même fréquence et d'une relation des phases définie de façon qu'une période du champ d'interférence produit par la superposition recouvre au moins trois éléments capteurs,

et on détermine à partir des signaux d'intensité des au moins trois éléments capteurs, la phase du rayonnement (43) ayant passé à travers le milieu transparent ou réfléchie par la surface spéculaire.

**14.** Dispositif pour la mise en oeuvre du procédé selon l'une des revendications 1 à 12, constitué :

d'une source de rayonnement (1), notamment d'une source de lumière pour l'émission d'un rayonnement cohérent (2) d'une fréquence prédéterminée sur un corps (3) avec une surface (4) réfléchissant de manière diffuse,

d'une optique de reproduction (6) pour reproduire le rayonnement (5) réfléchi par le corps (3) dans un plan d'image (7),

d'un capteur (8) disposé dans le plan d'image (7) avec un grand nombre d'éléments capteurs (9) disposés de préférence régulièrement, et

d'une source de rayonnement de référence (10) pour superposer au capteur (8) un rayonnement de référence (11) de même fréquence et de relation des phases définie de façon à obtenir par la superposition une fréquence porteuse, de préférence constante,

caractérisé

en ce que l'optique de reproduction (6) est réalisée et réglée de façon que l'image d'une tache produite par le rayonnement (2) sur le corps (3) recouvre dans le plan d'image (7) au moins trois éléments capteurs (13, 14, 15),

en ce que le rayon de référence est introduite de façon que la période de la fréquence porteuse recouvre au moins trois éléments capteurs (13, 14, 15),

et qu'il est prévu un calculateur qui détermine à partir des signaux d'intensité des au moins trois éléments capteurs (13, 14, 15) la phase du rayonnement (5) du corps (3).

**15.** Dispositif selon la revendication 14, caractérisé en ce que les éléments capteurs (9) sont disposés par lignes le long de lignes parallèles, de préférence à des distances égales (9, figure 2).

**16.** Dispositif selon la revendication 15, caractérisé en ce que l'optique de reproduction (6) est réalisée et réglée de façon que les images des taches produites par le rayonnement (2) sur le corps (3) recouvrent dans le plan d'image (7) au moins trois éléments capteurs se trouvant les uns à côté des autres (13, 14, 15) dans une ligne.

**17.** Dispositif selon l'une des revendications 14 à 16, caractérisé en ce que la source de rayonnement de référence est constituée d'un guide d'ondes lumineuses (31) menant dans l'optique de reproduction (6) (31, figure 5).

**18.** Dispositif selon l'une des revendications 14 à 16, caractérisé en ce que la source de rayonnement de référence est constituée d'un diaphragme (32) disposé devant ou dans l'optique de reproduction (6) avec plusieurs, de préférence deux ouvertures (33) (32, 33, figure 6).

**19.** Dispositif selon l'une des revendications 14 à 16, caractérisé en ce que la source de rayonnement de référence est constituée d'un coin optique (35), de préférence d'un prisme, disposé devant ou dans l'optique de reproduction (6), qui recouvre une partie, de préférence une moitié de l'ouverture de l'optique de reproduction (6) (35, figure 8).

**20.** Dispositif selon l'une des revendications 14 à 16, caractérisé en ce que la source de rayonnement de référence est constituée d'une grille optique (34) disposée devant ou dans l'optique de reproduction (6) (34, figure 7).

**21.** Dispositif selon l'une des revendications 14 à 16, caractérisé en ce que la source de rayonnement de référence est constituée d'un diviseur de rayons (56) disposé dans le trajet des rayons de reproduction.

**22.** Dispositif selon l'une des revendications 14 à 21, caractérisé par plusieurs sources de rayonnement de référence pour irradier le capteur (8) avec, respectivement, un rayonnement de référence d'une fréquence porteuse prédéterminée, de préférence constante, avec une relation des phases définie.

**23.** Dispositif selon la revendication 22, caractérisé par deux sources de rayonnement de référence.

**24.** Dispositif selon la revendication 22 ou 23, caractérisé en ce que les rayonnements de référence ont des fréquences respectivement différentes.

**25.** Dispositif selon l'une des revendications 14 à 24, caractérisé par une reproduction intermédiaire (53) disposée dans le trajet des rayons de reproduction.

**26.** Dispositif selon la revendication 25, caractérisé en ce qu'un premier objectif (51) et un deuxième objectif (52) sont disposés dans le trajet des rayons de reproduction et entre lesquels est produite la reproduction intermédiaire (53).

**27.** Dispositif selon la revendication 26, caractérisé en ce que le premier objectif (51) plus près de l'objet (3) est un objectif qui peut être échangé ou un objectif zoom.

**28.** Dispositif selon la revendication 26 ou 27, caractérisé en ce que le rayonnement de référence (54) est introduit dans le deuxième objectif (52) plus près du plan d'image (7).

**29.** Dispositif pour la mise en oeuvre du procédé selon la revendication 13, constitué

d'une source de rayonnement (36) notamment d'une source de lumière, pour l'émission d'un rayonnement cohérent, d'une fréquence prédéterminée sur un milieu transparent (40) ou un corps avec une surface spéculaire,

d'un capteur (42) avec un grand nombre d'éléments capteurs disposés de préférence régulièrement,

d'une source de rayonnement de référence pour irradier le capteur (42) avec la même fréquence que le rayonnement ayant passé à travers le milieu transparent ou réfléchi par le corps présentant la surface spéculaire,

une période du champ d'interférence produit par la superposition recouvrant au moins trois éléments capteurs,

et d'un calculateur qui détermine à partir des signaux d'intensité des au moins trois éléments capteurs, la phase du rayonnement passée à travers le milieu transparent (40) ou réfléchie par la surface spéculaire.

Fig. 1

Fig. 2

Fig. 4

Fig. 3

Fig. 5

Fig. 6

Fig. 7

Fig. 8

Fig. 9

Fig.10

Fig.11